# EUROPÄISCHE PATENTANMELDUNG

(11) **EP 1 011 181 A1**
(43) Veröffentlichungstag der Anmeldung: **21.06.2000**
(21) Anmeldenummer: 98123946.0
(22) Anmeldetag: 17.12.1998
(51) Int. Cl.: H02G 3/04, F16L 3/26

(54) **Montagekanal**

(71) Anmelder: KA-TE System AG, CH-8041 Zürich (CH); Hecht, Reinhard, 93047 Regensburg (DE); Manstorfer, Karl, 93047 Regensburg (DE)
(72) Erfinder: Häusermann, Christian, 8706 Meilen (CH)
(74) Vertreter: Patentanwälte Schaad, Balass, Menzl & Partner AG

(57) **Zusammenfassung**

Montagekanal (10) zum Verlegen von langgestreckten Gegenständen (45) mit einem Bodenelement (12) und einer Frontabdeckung (24). Das Bodenelement (12) weist eine Rückwand (14) auf, an die zwei Seitenwände (16) angeformt sind, welch von der Rückwand (14) abstehen. Die Seitenwände (16) sind durch eine konvexe Biegekante (18) in einen ersten Abschnitt (20) und einen zweiten Abschnitt (22) unterteilt. Die Frontabdeckung (24) weist ein Frontelement (26) und zwei, von dem Frontelement (26) abstehende Seitenflanken (28) auf. Die Seitenflanken (28) weisen ebenfalls eine konvexe Biegekante (18') auf, welche sie in einen ersten Flankenabschnitt (30) und einen zweiten Flankenabschnitt (32) unterteilt. Sie sind derart ausgestaltet, dass sie im abgedeckten Zustand des Montagekanals (10) parallel zu den Seitenwänden (16) verlaufen und mit ihren zweiten Flankenabschnitten (30) die Biegekanten (18) der Seitenwände (16) hintergreifen, so dass eine kraftschlüssige Verbindung zwischen Bodenelement (12) und Frontabdeckung (24) besteht.

## Beschreibung

Die Erfindung betrifft einen Montagekanal zum Verlegen langgestreckter Gegenstände gemäss den Merkmalen des Anspruchs 1.

Die Verlegung von Kabeln, Rohren, Lichtleitern und anderen langgestreckten Gegenständen erfolgt heute oft in bereits vorhandenen Schacht- und Kanalisationssystemen, wie z.B. in den Abwasserkanälen einer Gemeinde. In einem Montagekanal für langgestreckte Gegenstände können Rohre, Kabel, Lichtleiter u.ä. problemlos verlegt werden. Ausserdem bietet der Montagekanal auch einen Schutz vor Beschädigungen und vor Verschmutzung. Ist der Montagekanal für eine grössere Anzahl langgestreckter Gegenstände konzipiert, so ist auch ein nachträgliches Einbringen von weiteren langgestreckten Gegenständen problemlos möglich.

Aufgabe der vorliegenden Erfindung ist es, einen Montagekanal zur Verfügung zu stellen, der wirtschaftlich ist in seiner Herstellung und einfach in der Montage.

Dieses Ziel wird erreicht durch einen Montagekanal gemäss den Merkmalen des Anspruchs 1.

Besonders vorteilhaft ist eine konvexe Ausgestaltung einer zu einem Bodenelement des Montagekanals gehörenden Seitenwand im Zusammenspiel mit einer entsprechend ausgebildeten Seitenflanke einer Frontabdeckung. Durch eine federnde Ausgestaltung der Seitenflanke und/oder der Seitenwand können beide Teile, Seitenwand und Seitenflanke, ineinandergreifen, wobei das eine Teil das andere hintergreift, wodurch zwischen den beiden eine kraftschlüssige Verbindung in der Form eines Schnappverschlusses entsteht. Die Frontabdeckung kann also aufgrund der konvexen Form der Seitenwand und der entsprechenden Ausgestaltung ihrer Seitenflanke mit dem Bodenelement verbunden werden, ohne dass zusätzliche Befestigungselemente an der Frontabdeckung oder dem Bodenelement, z.B. in Form von Nuten, Federn o.ä., angebracht werden müssen. Dadurch ist zum einen die Fertigung des Montagekanals sehr einfach und wirtschaftlich. Zum anderen ist aber auch die Montage des Montagekanals sehr einfach, weil zum Abdecken des Montagekanals die Frontabdeckung nur fest an das Bodenelement angedrückt werden muss.

Einen besonderen Vorteil bringt eine Ausgestaltung des Montagekanals gemäss Anspruch 2. Durch Einschnitte in den Seitenflanken der Frontabdeckung und in den Seitenwänden des Bodenelementes jeweils bis wenigstens annähernd an das Frontelement bzw. an die Rückwand kann der Montagekanal auch ohne Probleme an gekrümmten Wänden angebracht werden. Durch die Einschnitte kann er in Richtung senkrecht zur Rückwand beliebig konvex und konkav auch abwechselnd konvex und konkav gebogen werden. Seine Stabilität parallel zur Rückwand bleibt dabei unangetastet.

Einen ganz besonderen Vorteil bildet der Montagekanal gemäss Anspruch 7. Zwei mit konvexen Biegekanten versehenen Seitenwände des Bodenelementes bilden zusammen mit entsprechend ausgebildeten Seitenflanken der Frontabdeckung je einen Schnappverschluss. Dadurch lässt sich die Frontabdeckung noch einfacher anbringen und die Herstellung des Montagekanals wird weiter vereinfacht. Wird als Querschnitt des Montagekanals ein Sechseck gewählt ist die Herstellung besonders einfach und der Winkel zwischen den einzelnen Wänden kann so gewählt werden, dass z.B. Wasser gut ablaufen kann, wodurch beispielsweise bei Montagekanälen aus Blech eine Korrosion durch Lachenbildung verhindert wird.

Im weiteren wird die Erfindung anhand der Fig. 1 bis 4a beispielhaft beschrieben. Dabei zeigen schematisch:
- Fig. 1: im Querschnitt einen sechseckigen Montagekanal;
- Fig. 2a: ein Bodenelement des Montagekanals aus Fig. 1 in Draufsicht;
- Fig. 2b: das Bodenelement aus Fig. 2a in Seitenansicht;
- Fig.3a: eine Frontabdeckung des Montagekanals aus Fig. 1 in Draufsicht
- Fig. 3b: die Frontabdeckung aus Fig. 3a in Seitenansicht.
- Fig. 4: den Montagekanal aus den Fig. 1 bis 3b montiert an der Innenwand eines Rohres in dessen Längsrichtung und an einer gekrümmten Wand eines rohrförmigen Schachtes in dessen Umfangsrichtung;

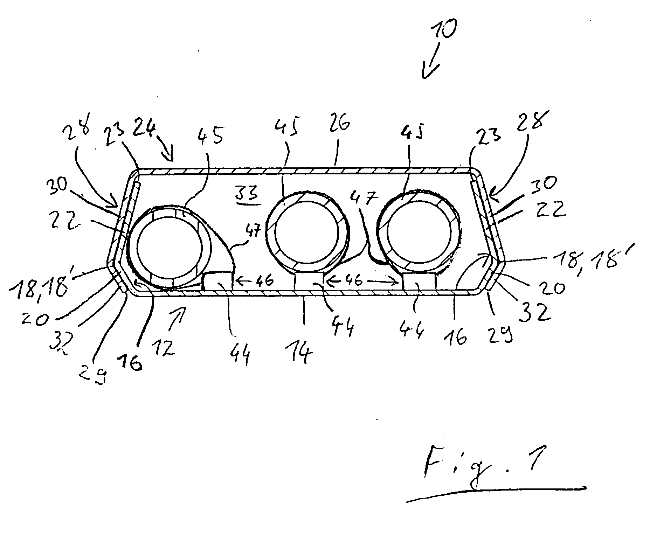

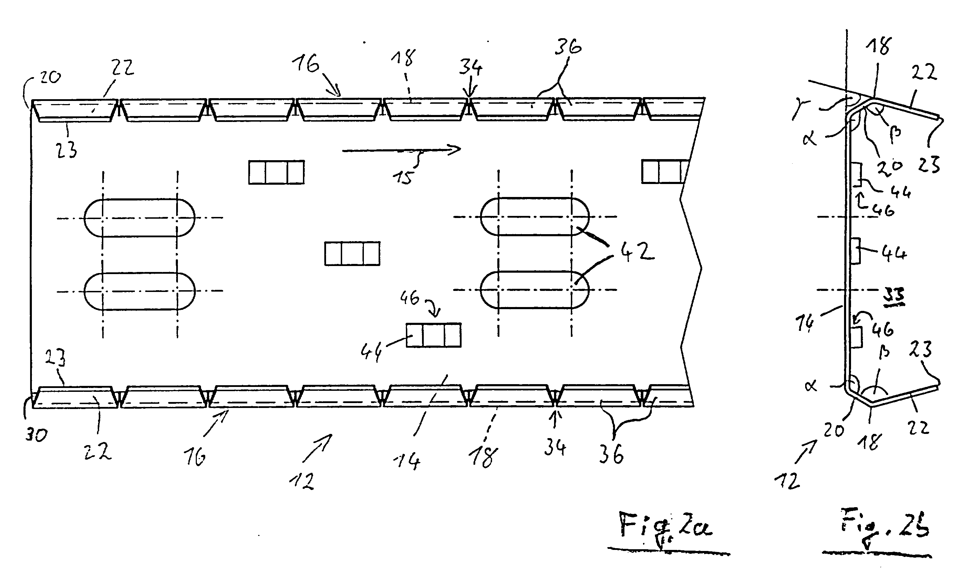

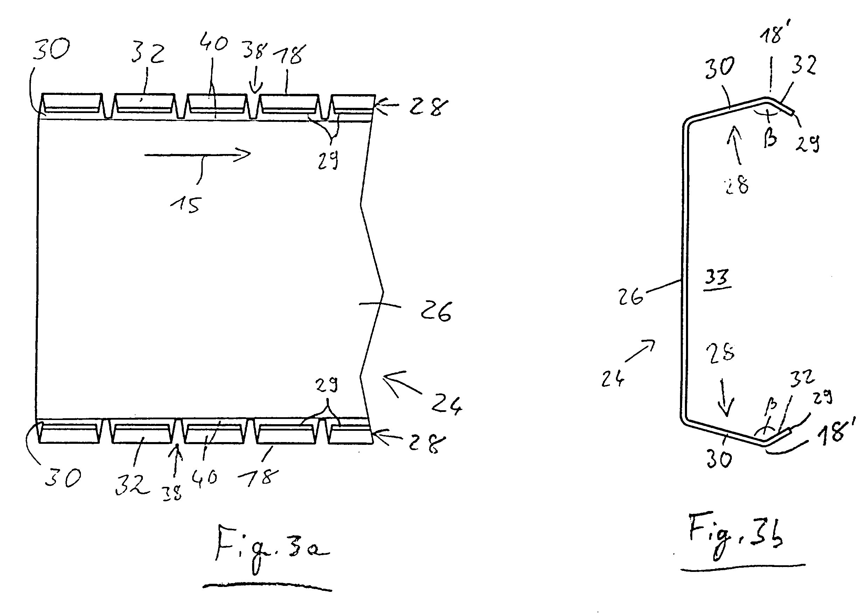

Die Fig. 1 bis 3b zeigen eine besonders bevorzugte Ausführungsform eines erfindungsgemässen Montagekanals 10. Der Montagekanal 10 weist ein Bodenelement 12 mit einer ebenen Rückwand 14 und mit zwei von der Rückwand 14 abstehenden, sich in Längsrichtung 15 des Montagekanals 10 erstreckenden Seitenwänden 16 auf (vgl. Fig.1 und Fig. 2a, 2b). Die Seitenwände 16 sind an die Rückwand 14 angeformt. Jede Seitenwand 16 weist eine sich in Längsrichtung 15 des Kanals 10 erstreckende, konvexe Biegekante 18 auf (gestrichelt gezeichnete Linie in Fig. 2a), die sie in einen ersten, an die Rückwand 14 anschliessenden, ebenen Abschnitt 20 und einen zweiten, von der Rückwand 14 beabstandeten, ebenen Abschnitt 22 unterteilt. Der zweite Abschnitt 22 ist dabei etwa doppelt so breit - gemessen von der Biegekante 18 bis zum Rand 23 - wie der erste Abschnitt 20 - gemessen von der Rückwand 14 bis zur Biegekante 18.

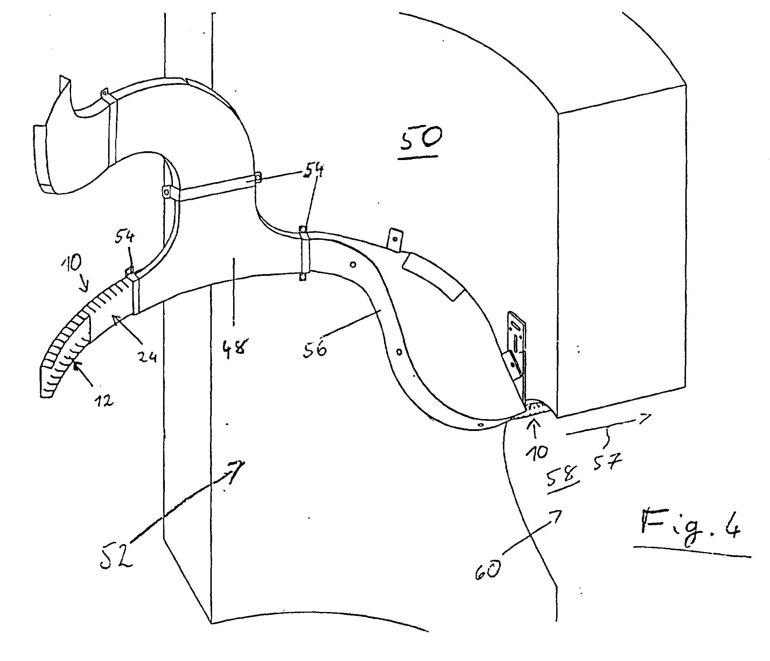

Abgedeckt ist der Montagekanal 10 durch eine Frontabdeckung 24, die ein ebenes Frontelement 26 und zwei von diesem Frontelement 26 abstehende, sich in Längsrichtung 15 des Montagekanals 10 erstreckende Seitenflanken 28 aufweist (vgl. Fig. 1 und Fig. 3a, 3b). Die Seitenflanken 28 sind an das Frontelement 26 angeformt. Wie die Seitenwände 16, so sind auch die Seitenflanken 28 durch eine sich in Längsrichtung 15 des Montagekanals 10 erstreckende, konvexe Biegekante 18' in einen ersten, an das Frontelement 26 anschliessenden, ebenen Flankenabschnitt 30 und einen zweiten, vom Frontelement 26 beabstandeten, ebenen Flankenabschnitt 32 unterteilt. Der erste Flankenabschnitt 32 - gemessen vom Frontelement 26 bis zur Biegekante 18' - ist dabei jeweils etwas breiter als der zweite Abschnitt 22 der Seitenwand 16. Der zweite Flankenabschnitt 32 - gemessen von der Biegekante bis zum Flankenrand 29 - ist dagegen jeweils etwa gleich breit oder etwas schmäler als der erste Abschnitt 20 der Seitenwand 16 des Bodenelementes 12. sDie Seitenflanken 28 sind so ausgeformt, dass sie in abgedecktem Zustand des Montagekanals 10, wie er in Fig. 1 gezeigt ist, parallel zu den Seitenwänden 16 verlaufen, diese seitlich umfassen und jeweils mit ihrem zweiten Flankenelement 32 die konvexe Biegekante 18 der entsprechenden Seitenwand 16 hintergreifen.

Der Querschnitt der dargestellten, bevorzugten Ausführungsform des Montagekanals 10 ist, wie aus Fig. 1 sehr gut erkennbar ist, sechseckig. Vier der sechs Seiten dieses Sechseckes werden durch die ersten Abschnitte 20 und zweiten Abschnitte 22 der Seitenwände 16 bzw. durch die ersten Flankenabschnitte 30 und zweiten Flankenabschnitte 32 der Seitenflanken 28 gebildet. Die zwei verbleibenden Seiten des Sechseckes werden durch die Rückwand 14 bzw. das Frontelement 26 des Montagekanals 10 gebildet. Dabei liegen die zwei Seitenwände 16 und die zwei Seitenflanken 28 einander gegenüber und sind jeweils spiegelbildlich zueinander ausgebildet.

Wie aus Fig. 2b zu erkennen ist, schlisset der erste Abschnitt 20 jeder Seitenwand 16 mit der Rückwand 14, vom Kanalinnenraum 33 aus betrachtet, einen stumpfen Winkel α ein, der in diesem Beispiel 120° beträgt. Abhängig von diesem stumpfen Winkel α schliessen der erste Abschnitt 20 und der zweite Abschnitt 22 jeder Seitenwand 16 einen, vom Kanalinnenraum 33 aus betrachtet, stumpfen Winkel β ein, dessen Grösse so gewählt ist, dass der zweite Abschnitt 22 zur Rückwand 14, wiederum vom Kanalinnenraum 33 aus betrachtet, in einem spitzen Winkel γ angeordnet ist. In dem hier dargestellten Beispiel hat der Winkel β eine Grösse von 135° und Winkel γ eine Grösse von 75°. Der Winkel α kann aber beliebig zwischen 90° < α < 180° variieren, wobei Winkel zwischen 110° und 140° besonders vorteilhaft sind. Entsprechend müssen dann die Winkel β und γ gewählt werden.

Der Montagekanal 10 ist vorzugsweise aus Blech, insbesondere aus rostfreiem Stahl geformt, so dass die Seitenwände 16 und die Seitenflanken 28 federnd ausgelenkt werden können. Wird zum verschliessen des Bodenelementes 12 die Frontabdeckung 24 auf das Bodenelement 12 aufgesetzt, so stehen die Flankenränder 29 zunächst auf den zweiten Abschnitten 22 der Seitenwände 16 des Bodenelementes 12 auf. Beim Andrücken der Frontabdeckung 24 werden sie entlang der zweiten Abschnitte 22 geführt und die Seitenflanken 28 werden auseinandergedrückt. Überschreiten die Flankenränder 29 die Biegekanten 18 der Seitenwände 16 lässt die Spannung auf den Seitenflanken 28 nach und die zweiten Flankenabschnitte 32 hintergreifen die Biegekante 18 wie bei einem Schnappverschlusses. Durch die parallele Ausgestaltung der Seitenflanken 28 und Seitenwände 16 greifen diese satt ineinander. Die so entstehende kraftschlüssige Verbindung verbindet die Frontabdeckung 24 und das Bodenelement 12 fest miteinander, so wie dies in Fig. 1 dargestellt ist.

Die beschriebene sechseckige Ausführungsform ist aus verschiedenen Gründen besonders vorteilhaft. Die speziell gewählte, konvexe Form der Seitenwände 16 mit der Biegekante 18 und den entsprechend ausgebildeten Seitenflanken 28 der Frontabdeckung 24 ermöglichen ein besonders einfaches Anbringen der Frontabdeckung 24 am Bodenelement 14 des Montagekanals 10 via schnappverschlussähnlicher, kraftschlüssiger Verbindung. Durch die im abgedeckten Zustand zueinander parallel verlaufenden Seitenwände 16 und Seitenflanken 28 wird eine besonders stabile Verbindung zwischen der Frontabdeckung 24 und dem Bodenelement 12 erreicht. Die Formgebung mit sechseckigen Querschnitt und spiegelbildlich ausgebildeten, einander gegenüberliegenden Seitenwänden 16 bzw. Seitenflanken 28 erlauben eine besonders einfache und damit kostengünstige Herstellung sowohl in Blech durch Biegen, als auch beispielsweise in Kunststoff durch Spritzgiessen. Bei einer Ausführung in Kunststoff sind die Biegekanten 18, 18' keine Biegekanten sondern kunststofftechnisch, z.B. durch Spritzguss, geformte Kanten. Die Art des Kunststoffes und Dicke der Seitenwände 16 bzw. Seitenflanken 28 müssen dann so gewählt sein, dass ein Ineinandergreifen der Seitenwände 16 und der Seitenflanken 28 durch eine elastische Auslenkung möglich ist. Ein weiterer Vorteil der sechseckigen Ausführungsform liegt in der Anordnung der Seitenwände 16 und der Seitenflanken 28, welche ein problemloses Ablaufen von Wasser u.ä. gewährleistet.

Wie aus der Fig. 2a ersichtlich, sind die Seitenwände 16 durch erste Einschnitte 34 in zungenartige Segmente 36 unterteilt. Auch die Seitenflanken 28 sind, wie aus Fig. 3a erkennbar durch zweite Einschnitte 38 in Flankensegmente 40 unterteilt. Diese Unterteilung erlaubt eine Verbiegung des Montagekanals 10 senkrecht zur Rückwand 14 und damit auch eine problemlose Montage an gekrümmten Wänden. Die Art der Krümmung, konvex oder konkav spielt dabei keine Rolle. Die Stabilität des Montagekanals 10 in Richtung parallel zur Rückwand 14 bleibt dabei erhalten.

Wie Fig. 2a zeigt, weist die Rückwand 14 des Bodenelementes 12 Fixieröffnungen 42 auf. Über diese Fixieröffnungen 42 lässt sich der Montagekanal 10 einfach mit Hilfe von Schrauben oder ähnlichen bekannten Befestigungselementen an einer Wand fixieren. Des weiteren weist die Rückwand 14 Befestigungsösen 44 mit Öffnungen 46 auf. Die Befestigungsösen 44 stehen von der Rückwand 14 gegen den Kanalinnenraum 33 des Montagekanals 10 ab, wie dies in den Fig. 1 und 2b dargestellt ist. Ihre Öffnungen 46 sind senkrecht zur Längsrichtung 15 des Montagekanals 10 ausgerichtet. Sie sind an die Rückwand 14 angeformt. Die Befestigungsösen 44 erlauben ein Fixieren von langgestreckten Gegenständen 45 von nahezu beliebiger Form und Grösse im Montagekanal 10. Zu ihrer Befestigung müssen nur entsprechende Befestigungsmittel 47, wie z.B. Kabelbinder, durch die Befestigungsösen 44 hindurchgeführt und festgezogen werden, so wie dies in Fig. 1 dargestellt ist. Als langgestreckte Gegenstände 45 sind in Fig. 1 drei kleine Rohre dargestellt, in denen je z.B. Lichtleiterkabel oder aber auch fluide Medien geführt sein können. Neben diesen einfachen Montagemöglichkeiten erlaubt die Ausgestaltung der Fixieröffnungen 42 und der an die Rückwand 14 angeformten Befestigungsösen 44 eine einfache und kostengünstige Herstellung des Montagekanals 10, z.B. durch Stanzen und Biegen und evtl. Tiefziehen von Blechen.

Neben der beschriebenen Ausführungsform mit sechseckigem Querschnitt sind natürlich auch Ausführungen des Montagekanals 10 denkbar, bei denen die Seitenwände 16 mehr als nur eine Biegekante 18 aufweisen und der Querschnitt mehr als sechs Ecken zeigt; oder Formen, bei denen die Seitenwände 16 in Form von Kreissegmenten ausgestaltet sind. Auch nicht spiegelsymmetrische Ausführungsformen sind denkbar und Ausführungsformen, bei denen nur eine Seitenwand 16 in der beschriebenen konvexen Form ausgebildet ist. Dementsprechend weist dann auch die Frontabdeckung 12 nur eine Seitenflanke 28 auf und die kraftschlüssige, schnappverschlussartige Verbindung wird nur an dieser einen Seitenwand 16 ausgebildet. Statt, dass die Seitenflanken 28 der Frontabdeckung 24 die Seitenwände 16 aussen, seitlich umgreifen, wie dies in Fig. 1 dargestellt ist, ist auch denkbar, dass die Seitenwände 16 die Seitenflanken 28 aussen, seitlich umgreifen.

Anstelle der Befestigungsösen 44 sind auch andere Befestigungsmöglichkeiten, wie z.B. klammerartige Halter o.ä., für die Befestigung der langgestreckten Gegenstände 45 im Montagekanal 10 möglich. Ebenso sind andere Fixierelemente als die Fixieröffnungen 42 für die Befestigung des Montagekanals 10 an der Wand denkbar.

Durch seine einfache Bauart ist der Montagekanal 10 nicht nur kostengünstig in der Herstellung und einfach in der Montage, er lässt sich auch leicht mit anderen Elementen kombinieren, die zum Verlegen von langgestreckten Gegenständen 45 nötig sein können. In Fig. 4 ist ein Montagekanal 10 mit Bodenelement 12 und Frontabdeckung 24 kombiniert mit einem Abzweiger 48 an einer gekrümmten Innenwand 50 eines rohrförmigen Schachtes 52 dargestellt. Während der Abzweiger 48 über Haltebügel 54 an der Innenwand 50 des Schachtes 52 befestigt ist, ist der hier gezeigte Montagekanal 10 nur im Anschlussbereich zum Abzeiger durch einen Haltebügel 54 des Abzweigers 48 miterfasst. Ansonsten ist er über seine Fixieröffnungen 42 befestigt. Auf der dem Montagekanal 10 gegenüberliegenden Seite des Abzweigers 48 schliesst sich eine Knickschutzanordnung 56 an, wie sie z.B. für Glasfaserkabel eingesetzt wird und wie sie beispielsweise in der Anmeldung Vertreternummer A12709ep beschrieben ist. An die Knickschutzanordnung 56 schliesst sich rechts ein Montagekanal 10 an, der diesmal in Längsrichtung 57 des den Schacht 52 kreuzenden Rohres 60 an dessen Rohrinnenwand 58 befestigt ist.

Mit dem erfindungsgemässen Montagekanal 10 steht also eine kostengünstige und in der Montage einfache Möglichkeit zur Verfügung, langgestreckte Gegenstände 45 zu Verlegen. Mit einer speziellen Ausführungsform ist dies nicht nur in Längsrichtung sondern auch quer zur Längsrichtung eines Rohres oder Schachtes und auf unregelmässig gekrümmten Wänden möglich.

## Patentansprüche

1. Montagekanal zum Verlegen von Langgestreckten Gegenständen (45), wie Rohren, Kabeln und Lichtleitern, mit einem Bodenelement (12), das eine an einer Wand befestigbare Rückwand (14) und eine von dieser Rückwand (14) abstehende und sich in Längsrichtung (15) des Montagekanals (10) erstreckende, im wesentlichen konvex geformte Seitenwand (16) aufweist, sowie mit einer ein Frontelement (26) und eine von dem Frontelement (26) abstehende Seitenflanke (28) aufweisende Frontabdeckung (24), wobei die Seitenwand (16) und die Seitenflanke (28) aufgrund einer federelastischen Auslenkung ineinandergreifen und eine auf der konvexen Form der Seitenwand (16) basierende, kraftschlüssige Verbindung zwischen dem Bodenelement (12) und der Frontabdeckung (24) ausgebildet ist.

2. Montagekanal nach Anspruch 1, dadurch gekennzeichnet, dass die Seitenwand (16) durch bis wenigstens annähernd an die Rückwand (14) reichende erste Einschnitte (34) in zungenartige Segmente (36) unterteilt ist und dass die Seitenflanke (28) der Frontabdeckung (24) durch bis wenigstens annähernd an das Frontelement (26) reichende zweite Einschnitte(38) in Flankensegmente (40) unterteilt ist.

3. Montagekanal nach Anspruch 1 oder 2, dadurch gekennzeichnet, dass die Seitenwand (16) an die Rückwand (14) angeformt ist und die Seitenflanke (28) vorzugsweise an das Frontelement (26) angeformt ist.

4. Montagekanal nach einem der Ansprüche 1 bis 3, dadurch gekennzeichnet, dass er aus Blech, vorzugsweise aus rostfreiem Stahl, geformt ist.

5. Montagekanal nach einem der Ansprüche 1 bis 4, dadurch gekennzeichnet, dass die Seitenwand (16) eine in Längsrichtung (15) des Montagekanals (10) verlaufende, konvexe Biegekante (18) aufweist, welche die Seitenwand (16) in einen ersten Abschnitt (20) und einen zweiten Abschnitt (22) trennt, wobei der erste Abschnitt (20) an die Rückwand (14) anschliesst und, vom Kanalinnenraum (33) her gesehen, zu dieser in einem stumpfen Winkel (a) angeordnet ist, der insbesondere zwischen 110° und 140° liegt.

6. Montagekanal nach Anspruch 5, dadurch gekennzeichnet, dass, vom Kanalinnenraum (33) aus gesehen, der von der Rückwand (14) beabstandete, zweite Abschnitt (22) der Seitenwand (16) gegenüber der Rückwand (14) in einem spitzen Winkel (g) angeordnet ist.

7. Montagekanal nach Anspruch 5 und 6, dadurch gekennzeichnet, dass das Bodenelement (12) zwei sich gegenüberliegende Seitenwände (16) mit je in einem Winkel (b, b') zueinander angeordneten ersten und zweiten Abschnitten (20, 22) aufweist, und der Querschnitt des Montagekanals (10) vorzugsweise sechseckig ist, wobei die Seiten des Sechsecks durch die vier Abschnitte (20, 22) der Seitenwände (16), durch die Rückwand (14) und durch das Frontelement (26) der Frontabdeckung (24) gebildet werden.

8. Montagekanal nach Anspruch 7, dadurch gekennzeichnet, dass die Seitenwände (16) des Bodenelementes (12) und die Seitenflanken (28) der Frontabdeckung (24) je spiegelbildlich zueinander ausgebildet sind.

9. Montagekanal nach einem der Ansprüche 1 bis 8, dadurch gekennzeichnet, dass die Rückwand (14) Befestigungsösen (44) zum Hindurchführen von für die Befestigung von langgestreckten Gegenständen (45) im Montagekanal (10) nötigen Befestigungsmitteln (47) aufweist, welche mit ihren Öffnungen (46) vorzugsweise senkrecht zur Längsrichtung (15) angeordnet sind.

10. Montagekanal nach Anspruch 9, dadurch gekennzeichnet, dass die Befestigungsösen (44) an die Rückwand (14) angeformt sind und insbesondere in den Kanalinnenraum (33) hineinragen.

11. Montagekanal nach einem der vorhergehenden Ansprüche, dadurch gekennzeichnet, dass die Rückwand (14) Fixieröffnungen (42) zum Befestigen des Montagekanals aufweist.
